Europäisches Patentamt

European Patent Office

Office européen des brevets

(11) Publication number: 0 369 342
A1

## (12) EUROPEAN PATENT APPLICATION

(21) Application number: 89120861.3

(22) Date of filing: 10.11.89

(51) Int. Cl.⁵: B65G 69/18

(30) Priority: 12.11.88 JP 147922/88 U

(43) Date of publication of application:
23.05.90 Bulletin 90/21

(84) Designated Contracting States:
DE FR GB

(71) Applicant: HOKOKU KOGYO CO. LTD.
2-10-29 Dejima Minami-ku
Hiroshima-shi Hiroshima-ken(JP)

(72) Inventor: Gongen, Masanori
5-37, Nishimoto-cho Higashi
Hiroshima-shi Hiroshima-ken(JP)

(74) Representative: Patentanwälte Wenzel &
Kalkoff
Flasskuhle 6 Postfach 2448
D-5810 Witten(DE)

(54) Dust eliminator of a bucket elevator.

(57) A dust eliminator of a bucket elevator is formed by mounting an exhaust duct (20) having an exhaust opening (19) at the bottom thereof to the grain throw-in opening (18), the duct (20) being in communication with the throw-in opening (19). In order to remove dust including chaffs effectively, first a striking plate (21) is provided in the upper space of the exhaust duct (20) located opposite to the throw-in opening (19) and dividing the upper space of the exhaust duct (20), second a suction opening (24) opened to the space area is defined by the back surface (21a) of the striking plate (21) and the inner wall of the exhaust duct (20) and third a suction device is connected to the suction opening (24).

FIG.1

EP 0 369 342 A1

**A dust eliminator of a bucket elevator**

## BACKGROUND OF THE INVENTION

### Field of the Invention

The present invention relates to a dust eliminator of a bucket elevator which is used for lifting the grains in a grain transferring path of a grain plant.

### Prior Art

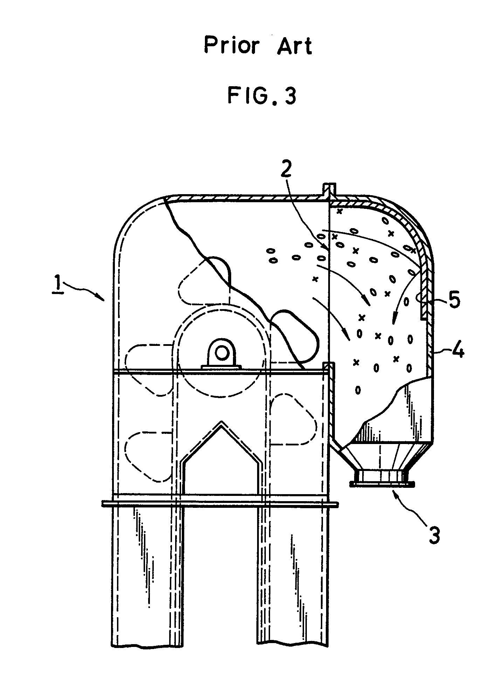

Conventionally, in a grain plant there has been provided an exclusive suction device to collect the dust on the way of the grain transportation circuitry in order to remove the dust including awn, beard and chaff while transporting the grains in the bucket elevator. The conventional bucket elevator for use of grains comprises, as shown in Fig. 3, an exhaust duct 4 having an exhaust opening 3 at the bottom thereof and being mounted on the casing 1 in communicating with the upper throw-in opening 2. On the opposite wall surface of the exhaust-duct 4 to the upper throw-in opening 2, a striking plate 5 is mounted, which is used for introducing the grains thrown in the exhaust opening 3 and preventing the wall surface from wearing due to the grain hitting.

In the upper portion of the casing 1 of the bucket elevator and the exhaust duct 4, a plenty of dust generated by throw-in of the grains is filled with, and which is exhausted together with the grain to be put out to contaminate the environmental atmosphere.

One proposal for resolving the above matter has been a provision of suction cup for removing the dust at the hopper located under the casing 1 for receiving the grains, and another proposal has been a provision of a suction cup located over the throw-in opening, which have, however, not been in successful manner.

Accordingly, one object of the present invention is to provide a dust eliminator, in which an effective elimination of the dust containing grain epidermis such as awn, beard and chaff etc is carried out at the time of throw-in without using a suction device etc in a more positive manner than before.

## SUMMARY OF THE INVENTION

In order to attain the above-mentioned object, according to the present invention in a dust eliminator of a bucket elevator to the upper grain throw-in opening which is connected to the exhaust duct having an exhaust opening at the bottom thereof, the eliminator comprises a striking plate hanging from the ceiling of the duct to divide the upper portion of the duct into two ports and a suction opening provided on the wall of the duct defining the port with the back surface of the striking plate, and the suction opening being provided with a suction device.

According to the present invention, when the air in the duct is sucked by the suction device, the air coming through the casing 11 makes an air stream bound for the suction opening, which flows traversely through the mass of the grain falling after hitting the striking plate, so that the dust containing the minute pieces such as rice hull or chaff of the grain, which is lighter than the grain and mixed with the grain mass, is sucked in the suction opening.

## BRIEF DESCRIPTION OF THE DRAWINGS

Fig. 1 is a vertical sectional view of the upper portion of the casing of the present invention.

Fig. 2 is a perspective side view of the bucket elevator of the present invention.

Fig. 3 is a vertical sectional view of the upper portion of the conventional casing.

## DETAILED DESCRIPTION OF THE PREFERRED EMBODIMENT

Hereinafter the preferred embodiment of the present invention will be explained based on the drawings attached.

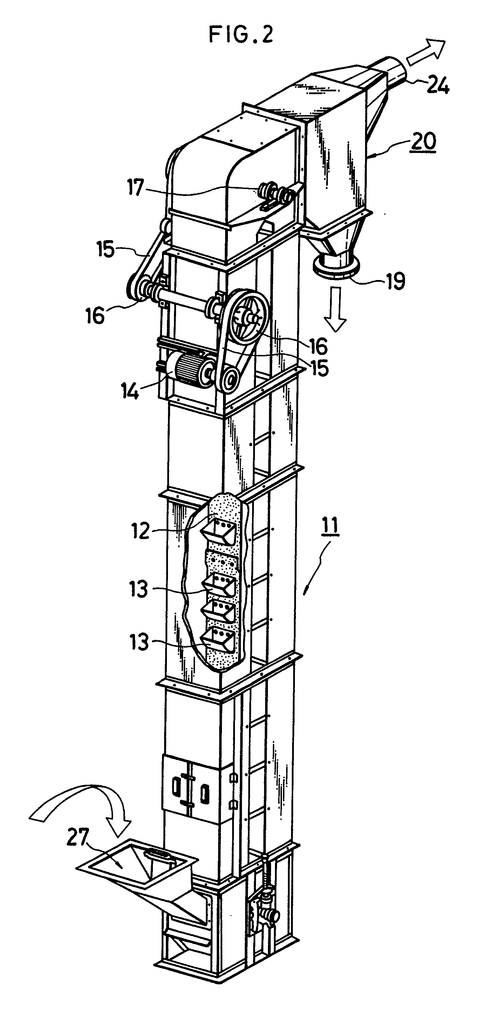

Fig. 2 shows the perspective view of the bucket elevator in total, in which reference numeral 11 shows an annular casing having an annular hollow therein. In the annular casing 11, a belt conveyer 12 having a plural number of buckets 13 is disposed in such a manner as the conveyer turns along the hollow of the casing. 14 is a motor which drives the belt conveyer 12 by rotating the belt conveyer shaft 17 through a belt 15 and a pulley 16 and so forth.

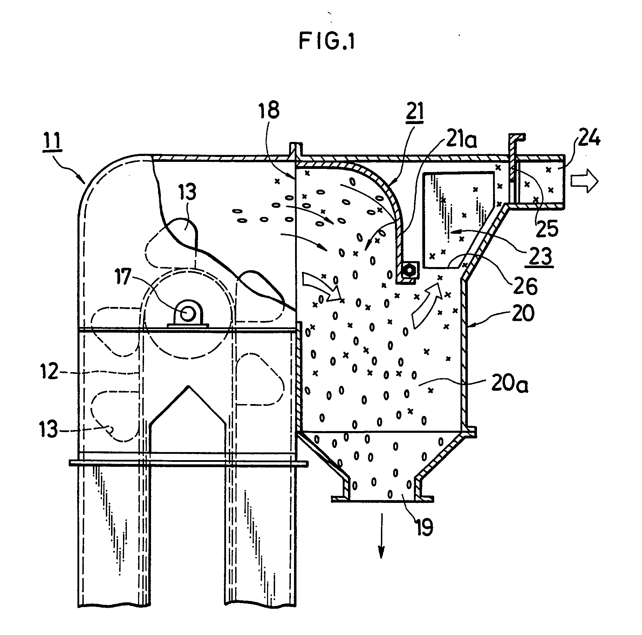

One side of the upper portion of the casing 11 has an opening 18, as shown in Fig. 1. To this grain throw-in opening 18, an exhaust duct 20 having an exhaust opening 19 at the bottom thereof is connected.

In this embodiment the exhaust duct 20 goes down from the opposite grain throw-in opening 18 in such a manner as the duct leads toward the exhaust opening 19. The upper space of the duct 20 is divided into two ports by a striking plate 21 hanging from the ceiling of the duct and one of the ports is defined by the back face 21a of the striking plate 21 and the wall of the duct 20 to make an air pooling port 23, where an suction opening 24 is provided on the duct wall. To the suction opening 24 a conventional suction device is mounted. By this structure it is obvious that the other space 20a in the duct other than the space of each port defined by the striking plate 21 is broader than the space of each port. Numeral 25 is a shutter device which can be provided if necessary to control the air amount or the air velocity going through the opening 24. A window 26 can be provided if necessary to observe the state of the dust going through the opening 24.

The dust eliminator of the present invention operates as follows.

The grains thrown into the receptacle hopper 27 are accommodated in each bucket 13 and lifted up by the belt conveyer 12 in the casing 11 and the backets 13 are turned over at the top of the turning belt conveyer and thrown-in from the opening 18 into the duct 20. The grains fall down after hitting the striking plate 21 to be exhausted from the exhaust opening 19 and transferred to other place. When the grains are thrown in from the bucket into the duct and hit the striking plate, the dust including the minute pieces such as the chaffs of the grain is dispersed in the space of the duct. Due to the light weight of the dust than the grains, it is sucked toward the suction opening 24 with aids of the air stream generated by the suction device without falling toward the exhaust opening 19.

According to the present invention, because of the structure as explained above, it becomes possible to remove the dust including chaffs effectively, which is generated in the upper portion of the casing and the duct, by transferring it on the air stream flowing toward the suction opening 24.

And, by employing the present invention the duct part of the conventional bucket elevator may be easily improved.

Further, the duct has an eliminating function by air blowing, so that when transferring the grains to other section such as a storage, a drying appliance or a cooling tank, the dust eliminating device can be installed in the bucket elevator as a transferring means without providing an eliminating device at the other section, which can save the costs of processes and appliances advantageously.

## Claims

1. A dust eliminator of the bucket elevator being formed by mounting an exhaust duct (20) having an exhaust opening (19) at the bottom thereof to the grain throw-in opening (18), the duct (20) being in communication with said opening (19), characterized in that the eliminator comprises: a striking plate (21) provided in the upper space of the duct (20) located opposite to the throw-in opening (19) and dividing the upper space of the duct (20);

a suction opening (24)opened to the space area being defined by the back surface (21a) of the striking plate (21) and the inner wall of the exhaust duct (20), and

a suction device connected to the suction opening (24).

2. A dust eliminator claimed in claim 1, wherein the striking plate (21) hangs from the upper wall of the exhaust duct (20).

3. A dust eliminator claimed in claim 1, wherein the space area (20) has the other opening toward the exhaust opening (19).

4. A dust eliminator claimed in claim 1, wherein an air stream from the grain throw-in opening (18) to the suction opening (24) is generated passing over the lower edge of the striking plate (21).

# FIG.1

FIG.2

Prior Art

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 617 531 (C.C. PALMER)<br>* Column 2, lines 19-23; figure 1 * | 1,2,3,4 | B 65 G 69/18 |

TECHNICAL FIELDS SEARCHED (Int. Cl.5)

B 65 G

The present search report has been drawn up for all claims

| Place of search | Date of completion of the search | Examiner |
|---|---|---|
| THE HAGUE | 14-02-1990 | BEERNAERT J.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)